# FASCICULE DE BREVET EUROPEEN

(11) **EP 2 692 199 B1**
(45) Date de publication et mention de la délivrance du brevet: **12.07.2017**
(21) Numéro de dépôt: 12706594.4
(22) Date de dépôt: 29.02.2012
(51) Int. Cl.: H05B 3/50

(54) **ECHANGEUR DE CHALEUR A ELEMENTS CHAUFFANTS ELECTRIQUES**
WÄRMETAUSCHER MIT ELEKTRISCHEN HEIZELEMENTEN
HEAT EXCHANGER HAVING ELECTRIC HEATING ELEMENTS

(30) Priorité: 28.03.2011 FR 1100908
(43) Date de publication de la demande: 05.02.2014
(73) Titulaire: Valeo Systèmes Thermiques, 78321 Le Mesnil St Denis (FR); Pierron, Frédéric, 78120 Rambouillet (FR); Tellier, Laurent, 75116 Paris (FR)
(72) Inventeur: PIERRON, Frédéric, F-78322 Le Mesnil Saint-Denis cédex (FR); TELLIER, Laurent, F-78322 Le Mesnil Saint-Denis cédex (FR)
(74) Mandataire: Metz, Gaëlle
(86) Numéro de dépôt international: PCT/EP2012/053477
(87) Numéro de publication internationale: WO 2012/130553

(56) Documents cités:
- EP-A1- 1 318 694
- EP-A1- 2 056 036
- WO-A1-03/086018
- FR-A1- 2 855 933
- US-A1- 2008 128 401

## Description

Le secteur technique de la présente invention est celui des installations de ventilation, chauffage et/ou climatisation montés sur un véhicule propulsé par un moteur électrique. L'invention vise plus particulièrement un dispositif de chauffage électrique monté dans ces installations et traversé par un flux d'air contenu par un boîtier de cette installation.

La raréfaction des ressources pétrolières conduit les constructeurs automobiles à développer des véhicules qui fonctionnent à partir de nouvelles sources d'énergie. La propulsion du véhicule par l'énergie électrique est une solution qui représente une alternative intéressante et il est alors nécessaire d'embarquer des batteries pour stocker cette énergie électrique et la fournir à un moteur électrique qui assure la propulsion du véhicule.

Les véhicules actuels équipés d'un moteur à combustion interne assurent le chauffage de l'habitacle en dérivant tout ou partie du fluide qui assure le refroidissement du moteur à combustion interne. Ce fluide de refroidissement chauffe au contact du moteur à combustion interne et cède ses calories à un flux d'air envoyé dans l'habitacle, par échange thermique avec un aérotherme installé dans le boîtier généralement monté sous une planche de bord équipant l'habitacle du véhicule.

Dans le cas d'un véhicule à propulsion électrique ou hybride, des modes de propulsions existent en l'absence de disponibilité du moteur à combustion interne privant le système de chauffage de cette source de calories. Il est alors connu d'assurer le chauffage de l'habitacle au moyen d'un radiateur électrique qui puise son énergie sur une batterie qui fournit également l'énergie nécessaire au moteur électrique de propulsion.

Cependant, une telle solution présente un certain nombre d'inconvénients. En effet, la tension d'alimentation du radiateur électrique couplée avec certains modes de commande (PWM) d'un tel appareil de chauffe peut générer des phénomènes qui créent des perturbations électromagnétiques, ces dernières se traduisant par des grésillements à l'écoute de la radio du véhicule, notamment.

Par ailleurs, l'utilisation de la tension de la batterie du moteur électrique de propulsion pour alimenter le radiateur électrique nécessite une gestion particulière du risque d'arcs électriques consécutifs à cette tension. Cette gestion n'est pas opérée de manière efficace dans la solution de l'art antérieur.

On notera également que les documents US 2008/128401 A1, WO 03/086018 A1 et EP 2 056036 A1 sont des documents de l'art antérieur divulguant au moins une partie des caractéristiques techniques du préambule de la revendication 1.

Le but de la présente invention est donc de résoudre les inconvénients décrits ci-dessus principalement en réalisant un radiateur qui comprend un corps de chauffe dans lequel est pratiqué un logement qui reçoit un dispositif de contrôle de l'allure de chauffe, ce logement comprenant un moyen d'isolation électrique, par exemple tapissé à l'intérieur du logement afin d'éviter tout arc électrique entre le corps de chauffe et le dispositif de contrôle.

L'invention a donc pour objet un dispositif de chauffage électrique ou échangeur de chaleur comprenant un corps de chauffe dans lequel est installé au moins un élément chauffant électrique dont le fonctionnement est placé sous la dépendance d'un module de commande constitutif du dispositif de chauffage, le corps de chauffe comprenant des parois délimitant au moins partiellement une cavité dans laquelle le module de commande est logé, innovant en ce que l'élément chauffant électrique et le module de commande sont aptes à être alimentés sous une tension comprise entre 80 et 600 Volts, appelée basse tension, et en ce qu'il est prévu un isolant électrique qui couvre les parois délimitant la cavité, l'isolant électrique prend la forme d'une feuille flexible de forme complémentaire à la forme des parois délimitant la cavité.

Selon une première caractéristique de l'invention, les parois qui délimitent la cavité sont une paroi de fond et des parois périphériques perpendiculaires à ladite paroi de fond.

Avantageusement, le corps de chauffe comprend un faisceau de tubes traversé par un flux à chauffer, ledit faisceau de tubes avec lesdites parois délimitant la cavité étant rassemblés pour former une unité monobloc.

Selon une caractéristique de l'invention, la feuille flexible de forme complémentaire à la forme des parois délimite la paroi de fond et les parois périphériques perpendiculaires à ladite paroi de fond.

Dans cette variante, la feuille flexible présente au moins un trou traversant par lequel au moins un conducteur alimentant l'élément chauffant passe.

Selon une troisième caractéristique de l'invention, la cavité est fermée par un couvercle.

Dans cette variante, le couvercle est réalisé en un matériau métallique et comprend l'isolant électrique disposé sur sa face tournée vers la cavité.

Avantageusement, l'isolant électrique est réalisé à partir de portions distinctes et adjacentes.

Avantageusement encore, l'unité monobloc est réalisée en un matériau métallique.

Selon encore une autre caractéristique de l'invention, l'isolant électrique prend la forme d'une couche de matière isolante pulvérisée sur une face interne des parois délimitant la cavité.

Dans un mode de réalisation, l'invention sera reconnaissable en ce que le module de commande comprend une première partie adaptée ou parcourue par la basse tension et une deuxième partie adaptée ou parcourue par une tension comprise entre 5 et 48 Volts, appelée très basse tension. On reconnaitra la partie du PCB consacrée à la basse tension par les distances d'isolement entre pistes largement supérieures aux distances d'isolement utilisées pour la partie très basse tension. Une démarcation dite d'isolation galvanique, autrement appelée barrière de potentiels, entre les parties basse et très basse tension existera. De plus les connections électriques entre la commande et les parties chauffantes seront situées dans la zone dite basse tension.

Dans une telle situation, la première partie et la deuxième partie sont formées sur un même circuit imprimé.

Enfin, l'invention couvre aussi une installation de ventilation et de chauffage pour véhicule automobile, notamment animé par un moteur électrique, et comprenant un dispositif de chauffage où l'une quelconque des caractéristiques décrites ci-dessus est utilisées.

Un tout premier avantage selon l'invention réside dans une gestion simplifiée du risque d'arc électrique au niveau d'un dispositif de chauffage supportant son propre moyen de commande et alimenté par une tension électrique élevée. En d'autres termes, l'invention permet de réaliser une isolation électrique à un coût réduit pour un radiateur basse tension.

Un autre avantage réside dans la simplicité de fabrication d'un tel dispositif de chauffage. Le corps de chauffe est réalisé de manière indépendante du module de commande et c'est la structure de ce corps de chauffe, par l'existence de la cavité, qui assure un blindage électromagnétique. Il n'est ainsi pas nécessaire d'ajouter des composants supplémentaires pour éviter les perturbations électromagnétiques.

Enfin, un dernier avantage réside dans la possibilité de recycler aisément le corps de chauffe car celui-ci peut être réalisé à partir d'un même matériau, par exemple un aluminium ou alliage d'aluminium. Il est ainsi également possible de réaliser de manière unitaire le corps de chauffe, notamment en assemblant ces divers composants par soudage, notamment brasage.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un dispositif de chauffage électrique selon l'invention,
- la figure 2 une vue de la coupe référencée A-A sur la figure 1, illustrant un mode réalisation du module de commande intégré au dispositif de chauffage électrique selon l'invention,
- la figure 3 est une vue de dessus du mode de réalisation représenté sur la figure 2.

Il faut noter que les figures exposent l'invention de manière détaillée pour mettre en oeuvre l'invention, lesdites figures pouvant bien entendu servir à mieux définir l'invention le cas échéant.

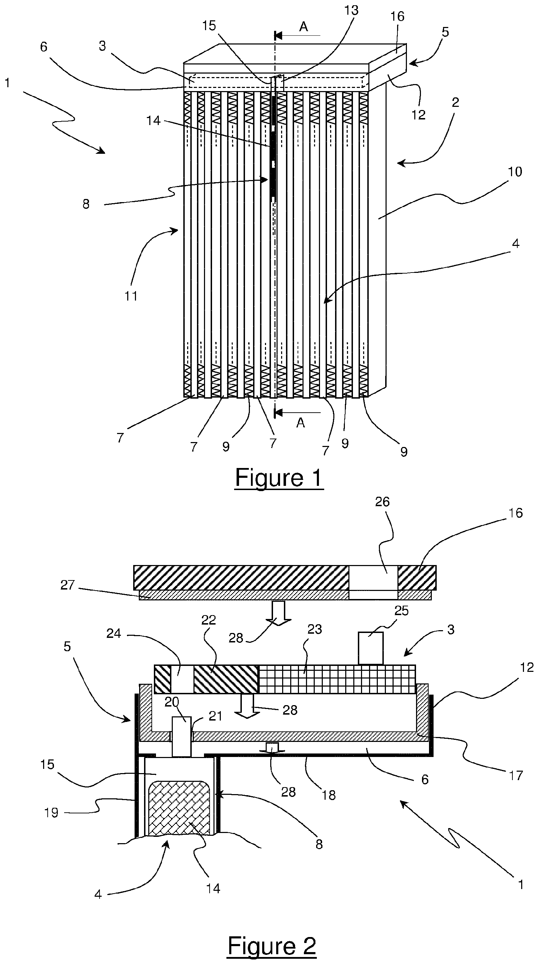

La figure 1 illustre de manière schématique le dispositif de chauffage électrique 1 selon l'invention. Ce dernier est constitué principalement de deux parties distinctes reliées électriquement l'une à l'autre : un corps de chauffe 2 et un module de commande 3.

Le corps de chauffe 2 comprend un faisceau de tubes 4 destiné à être traversé par le fluide à chauffer, ce dernier pouvant être un fluide gazeux ou un fluide liquide. Dans le cas d'une installation de ventilation et de chauffage pour véhicule automobile, le fluide gazeux est un flux d'air véhiculé dans l'installation et réchauffé par l'intermédiaire de dissipateurs thermiques 9. Dans cette même installation, le fluide à l'état liquide peut également être une eau additionnée de glycol qui circule dans le système de refroidissement.

Le corps de chauffe 2 se poursuit au delà du faisceau de tubes 4 par des parois 5 qui bordent une cavité 6, cette dernière délimitant un volume interne dans lequel est installé le module de commande 3.

Le corps de chauffe 2 comprend une pluralité de logements 7 qui reçoivent au moins un élément chauffant électrique 8. La figure 1 ne représente qu'un seul élément chauffant électrique 8 mais il est bien sur évident que cet élément chauffant est reproduit dans chaque logement 7 constitutif du faisceau de tubes 4 et s'étend d'une extrémité à l'autre du logement 7 qui le reçoit.

Selon une variante de réalisation non représentée, le corps de chauffe comprend une pluralité de logements qui reçoivent, par exemple de façon alternative, un élément chauffant électrique et un fluide caloporteur circulant dans un circuit de refroidissement d'une source de chaleur, telle qu'un moteur à combustion interne. Pour ce faire, la partie du corps de chauffe, opposée à celle recevant le module de commande, comprend une boîte à eau, nommée par la suite collecteur, sur laquelle est disposée des moyens de connexion au circuit de refroidissement, lesdits moyens de connexions formant des interfaces d'entrée et de sortie du fluide caloporteur dans le collecteur.

Entre chaque logement 7 est installé un dissipateur thermique 9 dont la fonction est d'augmenter la surface d'échange entre le dispositif de chauffage selon l'invention, en particulier les éléments chauffants électriques 8, et le fluide qui traverse le faisceau de tubes 4. Ce dissipateur thermique 9 est par exemple réalisé par un feuillard plié en zig-zag et sur lequel peut être pratiquées des persiennes pour favoriser l'échange thermique.

Pour des raisons de simplicité, les dissipateurs 9 sont représentés partiellement mais il est précisé que ces dissipateurs s'étendent sur toute la longueur d'un logement 7.

En pratique, ce logement 7 est réalisé par deux plaques chacune en appui sur le dissipateur 9 adjacent. Selon un autre mode de réalisation, le logement est mis en oeuvre par un tube de section rectangulaire ou oblongue dans lequel l'élément chauffant électrique 8 est enfilé.

Le faisceau de tubes 4 est bordé par un premier flanc latéral 10 et un deuxième flanc latéral 11 qui s'étendent tous deux au-delà du faisceau de tubes 4, afin de former les parois 5 qui délimitent au moins partiellement la cavité 6. Cette délimitation est partielle en ce que les parois 5 sont situées au fond et sur les côtés de la cavité, le dessus étant voué à être obturé par un couvercle 16.

L'épaisseur de la cavité 6 est plus grande que l'épaisseur du faisceau de tubes 4. Autrement dit, la cavité 6 déborde du faisceau de tubes 4 dans un plan orthogonal à un plan qui passe par la face du faisceau traversée par le flux d'air à chauffer.

La cavité 6 est fermée par le couvercle 16 qui vient en appui sur une tranche de parois périphériques 12 formant parties des parois 5 entourant la cavité 6.

L'élément chauffant électrique 8 est par exemple constitué de deux électrodes 13 et 15, dont la fonction est de transporter le courant électrique du module de commande 3 vers des céramiques 14 ou pierres chauffantes à effet CTP (pour Coefficient de Température Positif) qui forment la source calorifique du dispositif de chauffage électrique 1 selon l'invention.

L'élément chauffant électrique 8 est ainsi constitué d'une première électrode 13 parcourue par un potentiel électrique négatif, d'au moins une céramique 14 ou pierre chauffante à effet CTP et d'une deuxième électrode 15 chargée de conduire le potentiel électrique positif à la céramique 14.

On notera tout particulièrement que le corps de chauffe 2, en particulier le faisceau de tubes 4, est connecté électriquement à une masse électrique distincte des potentiels électriques appliqués aux électrodes 13, 15 évoquées ci-dessus. On évite ainsi que le corps de chauffe ne se transforme en une antenne qui rayonne les perturbations électromagnétiques consécutives à l'emploi de la basse tension et consécutives à l'emploi d'une commande de type PWM (de l'anglais « Pulse With Modulation »). On permet également au corps de chauffe de prendre une fonction de bouclier électrique.

La figure 2 montre plus en détail le dispositif de chauffage au niveau du module de commande 3. La figure 2 illustre par des flèches référencées 28 la phase de montage par empilement d'un isolant électrique 17, du module de commande 3 et du couvercle 16.

Pour éviter tout arc électrique, l'isolant électrique 17 est installé dans le volume interne définit par la cavité 6, entre les parois 5 de cette cavité 6 et le module de commande 3. Autrement dit, l'isolant électrique 17 recouvre les parois de la cavité, en ce sens qu'il est accolé contre ces dernières. Pour ce faire, l'isolant électrique 17 prend une forme complémentaire à la forme des parois délimitant la cavité 6.

Les parois, référencées 5 et délimitant la cavité 6, sont formées par une paroi de fond 18 et les parois périphériques 12. La paroi de fond 18 est formée par une plaque plane qui s'étend dans un plan orthogonal à la face 19 du faisceau de tubes 4 traversée par le flux, par exemple d'air. La paroi de fond 18 présente au moins un trou par lequel un conducteur électrique 20 passe, ce dernier servant à transporter le courant électrique de la partie haute tension du module de commande 3 vers les électrodes 13 ou 15. Ce conducteur électrique 20 forme un terminal électrique solidarisé sur l'électrode, par exemple par soudage. Le trou peut être continu de sorte à accueillir une pluralité de conducteur électrique 20 mais la paroi de fond 18 peut également présenter une multiplicité de trous, chaque trou étant traversé par un seul terminal ou par les deux terminaux affectés à un même élément chauffant électrique 8. Cette paroi de fond 18 fait partie du corps de chauffe 2 et est réalisée dans le même matériau que le faisceau de tubes 4. Il s'agit d'un matériau métallique, par exemple un aluminium ou alliage d'aluminium, afin de canaliser les champs magnétiques consécutifs aux perturbations électromagnétiques.

Perpendiculairement à cette paroi de fond 18 s'étendent les parois périphériques 12. Ces dernières comprennent un premier plat qui s'étend dans le plan de la face 19 du faisceau de tubes 4 traversées par le fluide à chauffer et un deuxième plat, parallèle au premier plat, et situé à l'opposé de ce dernier par rapport au module de commande 3. Ces parois périphériques 12 comprennent également une portion du premier flanc 10 et une portion du deuxième flanc 11 qui s'étendent dans l'épaisseur de la cavité 6 orthogonalement au premier plat et/ou au deuxième plat. Les parois périphériques 12 ainsi définies forment une bande autour de la cavité 6.

Selon un exemple de réalisation, l'isolant électrique 17 est formé par une feuille flexible qui présente une propriété diélectrique, par exemple réalisée en plastique tel que du silicone. Cette feuille flexible présente au moins un trou 21 qui traverse de part en part la feuille flexible. Ce trou 21 est pratiqué au droit du conducteur électrique 20 de sorte à autoriser son passage et permettre ainsi son raccordement électrique au module de commande 3.

La création et l'assemblage de cette feuille flexible peuvent être réalisés par exemple selon trois méthodes. Une première méthode consiste à fabriquer la feuille flexible de manière distincte du corps de chauffe puis à rapporter cette feuille flexible dans la cavité. Une deuxième méthode consiste à calfeutrer les conducteurs électriques 20 puis à pulvériser une couche de matière isolante, par exemple un plastique diélectrique, sur une face interne des parois 5 délimitant la cavité 6. Une troisième méthode consiste à calfeutrer les conducteurs électriques 20 puis à immerger la cavité 6 dans un bain de matière plastique électriquement isolante maintenue à l'état liquide.

Le faisceau de tubes 4 et les parois 5 délimitant la cavité sont rassemblés pour former une unité monobloc. On comprend ainsi que les logements 7, les dissipateurs thermiques 9, les flancs latéraux 10 et 11 prolongés des parois périphérique 12 et la paroi de fond 18 forment un ensemble unitaire avantageusement fabriqués à partir d'un même matériau. Le caractère monobloc ou unitaire est obtenu par exemple par brasage ensemble de ces pièces. Une telle configuration améliore la recyclabilité du dispositif de chauffage selon l'invention.

La cavité 6 sert de zone de réception du module de commande 3. Ce dernier est constitué d'une première partie 22 parcourue par la basse tension et une deuxième partie 23 parcourue par une tension comprise entre 5 et 48 Volts, appelée très basse tension. La première partie 22 et la deuxième partie 23 sont formées par un même circuit imprimé qui supporte des composants électroniques alimentés par une basse tension, des composants électroniques alimentés par une très basse tension et une isolation galvanique installée entre les composants basse tension et les composants basse tension. L'isolation galvanique a pour fonction d'empêcher toute remontée électrique de la basse tension vers la basse tension, en cas, notamment, de court-circuit. Cette isolation galvanique prend par exemple la forme d'un composant opto-coupleur et est capable de transférer les signaux électriques ou l'énergie électrique des composants très basse tension vers les composants basse tension, ou inversement, tout en empêchant tout contact physique, grâce au caractère optique de la transmission de signal dans le cas d'un opto-coupleur, ou au caractère magnétique de la transmission de l'énergie électrique dans le cas d'un transformateur, par exemple.

La première partie 22 destinée à la basse tension est traversée de part en part par au maximum autant de fentes 24 qu'il existe de conducteur électrique 20 qui débouchent dans la cavité 6. Une fois assemblé, ce conducteur électrique 20 passe au travers de la fente 24 pour être raccordé électriquement aux composants électroniques basse tension installés sur l'une et/ou l'autre des faces du circuit imprimé. On notera que les électrodes des conducteurs électriques 20 peuvent être reliés entre eux par une pièce intermédiaire afin de limiter le nombre de connections avec la carte de commande, tel que par exemple au moyen d'un dispositif de connexion, appelé busbar.

Selon ce mode de réalisation, on notera que le circuit imprimé constitutif du module de commande 3 s'étend dans un plan perpendiculaire au plan de la face 19 traversée par le flux d'air ou le flux de liquide à chauffer.

Le module de commande 3 comprend au moins un connecteur 25 destiné à relier la première partie 22 et/ou la deuxième partie 23 au réseau de puissance et/ou de commande du véhicule. Ce connecteur 25 passe au travers du couvercle 16 via un orifice 26 qui traverse l'épaisseur du couvercle 16. Pour éviter une propagation des perturbations électromagnétiques par la portion ouverte de la cavité, le couvercle est réalisé en un matériau métallique. Néanmoins, l'emploi de ce matériau provoque également le risque d'arc électrique entre le module de commande 3 et le couvercle 16. Pour corriger cette situation, le couvercle 16 comprend l'isolant électrique complémentaire 27 disposé sur sa face tournée vers la cavité 6. Comme pour l'isolant électrique 17 disposé dans la cavité 6, celui-ci peut être réalisé par apport d'une feuille flexible en plastique, par pulvérisation ou par immersion. L'isolant électrique complémentaire 27 et l'isolant électrique 17 peuvent former une seule et même pièce, l'isolant électrique complémentaire 27 étant relié à l'isolant électrique 17 par une portion formant charnière afin d'autoriser le montage du module de commande dans la cavité 6.

Selon une autre variante, l'isolation électrique est réalisée à partir de portions distinctes et adjacentes, ces portions étant ici mises en oeuvre par l'isolant électrique 17 installé dans la cavité 6 et l'isolant électrique complémentaire 27 solidarisé sur la face interne du couvercle 16, c'est-à-dire celle tournée vers le volume intérieur de la cavité 6. Le montage du module de commande 3 est alors facilité par le caractère distinct des portions de l'isolant électrique tout en évitant tout risque d'arc électrique par le fait que ces portions sont immédiatement adjacentes, et éventuellement en contact l'une contre l'autre.

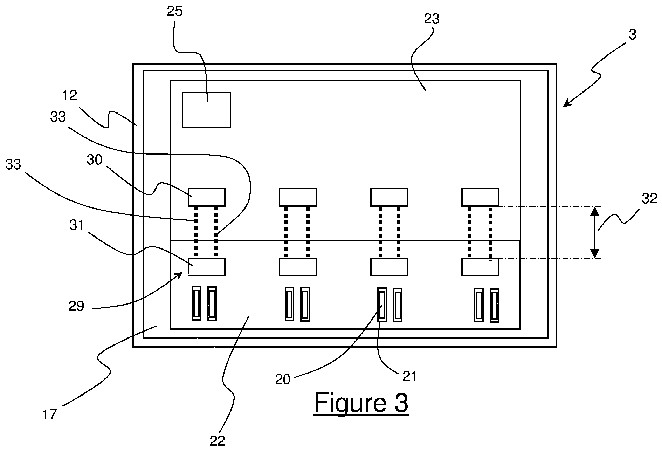

La figure 3 montre une vue de dessus de la figure 2, où le couvercle 16 a été retiré. Les parois périphériques 12 sont en contacts avec l'isolant électrique 17 et le module de commande 3 est reçu dans un volume entouré par l'isolant électrique 17.

Le circuit imprimé du module de commande 3 est partagé en la première partie 22 et la deuxième partie 23, cette dernière servant de support au connecteur 25. La première partie 22 comprend une pluralité de fentes 21 au travers desquelles passe une électrode 20.

Pour garantir une isolation électrique entre la basse tension et la très basse tension sur le même circuit imprimé, il est installé l'isolant galvanique. L'opto-coupleur comprend un émetteur/récepteur 30 et un récepteur/émetteur 31 entre lesquels circule un signal lumineux 33. La distance, référencée 32, qui sépare l'émetteur/récepteur 30 du récepteur/émetteur 31 garantit l'indépendance électrique entre la basse tension et la très basse tension sur un même circuit imprimé.

## Revendications

1. Dispositif de chauffage électrique (1) comprenant un corps de chauffe (2) dans lequel est installé au moins un élément chauffant électrique (8) dont le fonctionnement est placé sous la dépendance d'un module de commande (3) constitutif du dispositif de chauffage, le corps de chauffe (2) comprenant des parois (5) délimitant au moins partiellement une cavité (6) dans laquelle le module de commande (3) est logé, **caractérisé en ce que** l'élément chauffant électrique (8) et le module de commande (3) sont aptes à être alimentés en basse tension, et **en ce qu'**il est prévu un isolant électrique (17) qui couvre les parois (5) délimitant la cavité (6), l'isolant électrique (17) prenant la forme d'une feuille flexible de forme complémentaire à la forme des parois (5, 12, 18) délimitant la cavité (6).

2. Dispositif selon la revendication 1, dans lequel les parois (5) qui délimitent la cavité sont au moins une paroi de fond (18) et des parois périphériques (12) perpendiculaires à ladite paroi de fond (18).

3. Dispositif selon l'une des revendications 1 ou 2, dans lequel le corps de chauffe (2) comprend un faisceau de tubes (4) traversé par un flux à chauffer, ledit faisceau de tubes (4) avec lesdites parois (5, 12, 18) délimitant la cavité (6) étant rassemblés pour former une unité monobloc.

4. Dispositif selon la revendication 3, dans lequel la feuille flexible présente au moins un trou (21) traversant par lequel passe au moins un conducteur électrique (20) alimentant l'élément chauffant électrique (8).

5. Dispositif selon l'une quelconque des revendications précédentes, dans lequel la cavité (6) est fermée par un couvercle (16).

6. Dispositif selon la revendication 5, dans lequel le couvercle (16) est réalisé en un matériau métallique et comprend l'isolant électrique (27) disposé sur sa face tournée vers la cavité (6).

7. Dispositif selon la revendication 3, dans lequel l'unité monobloc est réalisée en un matériau métallique.

8. Dispositif selon l'une quelconque des revendications précédentes, dans lequel l'isolant électrique (17) prend la forme d'une couche de matière isolante pulvérisée sur une face interne des parois (5, 12, 18) délimitant la cavité.

9. Dispositif selon l'une quelconque des revendications précédentes, dans lequel le module de commande (3) comprend une première partie (22) parcourue par la basse tension et une deuxième partie (23) parcourue par une tension comprise entre 5 et 48 Volts, appelée très basse tension.

10. Dispositif selon la revendication 9, dans lequel la première partie (22) et la deuxième partie (23) sont formées sur un même circuit imprimé.

11. Installation de ventilation et chauffage pour véhicule, notamment animé par un moteur électrique, comprenant un dispositif de chauffage (1) selon l'une quelconque des revendications précédentes.

## Patentansprüche

1. Elektrische Heizvorrichtung (1), die einen Heizkörper (2) umfasst, in dem wenigstens ein elektrisches Heizelement (8) installiert ist, dessen Funktionsweise unter die Abhängigkeit von einem Steuermodul (3) gestellt ist, das für die Heizvorrichtung konstitutiv ist, wobei der Heizkörper (2) Wände (5) umfasst, die einen Hohlraum (6), in dem das Steuermodul (3) aufgenommen ist, wenigstens teilweise begrenzen, **dadurch gekennzeichnet, dass** das elektrische Heizelement (8) und das Steuermodul (3) mit einer niedrigen Spannung versorgt werden können und dass eine elektrische Isolation (17) vorgesehen ist, die die Wände (5), die den Hohlraum (6) begrenzen, abdeckt, wobei die elektrische Isolation (17) die Form einer flexiblen Lage annimmt, deren Form zu der Form der Wände (5, 12, 18), die den Hohlraum (6) begrenzen, komplementär ist.

2. Vorrichtung nach Anspruch 1, wobei die Wände (5), die den Hohlraum begrenzen, wenigstens eine Bodenwand (18) und Umfangswände (12), die zu der Bodenwand (18) senkrecht sind, umfassen.

3. Vorrichtung nach einem der Ansprüche 1 oder 2, wobei der Heizkörper (2) ein Rohrbündel (4) umfasst, das von einem zu erhitzenden Strom durchquert wird, wobei das Rohrbündel (4) mit den Wänden (5, 12, 18), die den Hohlraum (6) begrenzen, zusammengefügt ist, um eine Monoblockeinheit zu bilden.

4. Vorrichtung nach Anspruch 3, wobei die flexible Lage wenigstens ein Durchgangsloch (21) aufweist, durch das wenigstens ein elektrischer Leiter (20) verläuft, der das elektrische Heizelement (8) versorgt.

5. Vorrichtung nach einem der vorhergehenden Ansprüche, wobei der Hohlraum (6) durch einen Deckel (16) verschlossen ist.

6. Vorrichtung nach Anspruch 5, wobei der Deckel (16) aus einem Metallmaterial verwirklicht ist und einen elektrischen Isolator (27) aufweist, der auf der dem Hohlraum (6) zugewandten Fläche angeordnet ist.

7. Vorrichtung nach Anspruch 3, wobei die Monoblockeinheit aus einem Metallmaterial verwirklicht ist.

8. Vorrichtung nach einem der vorhergehenden Ansprüche, wobei der elektrische Isolator (17) die Form einer Schicht aus pulverisiertem Isoliermaterial auf einer Innenfläche der Wände (5, 12, 18), die den Hohlraum begrenzen, annimmt.

9. Vorrichtung nach einem der vorhergehenden Ansprüche, wobei das Steuermodul (3) einen ersten Teil (22), an den eine niedrige Spannung angelegt wird, und einen zweiten Teil (23), an den eine Spannung im Bereich von 5 bis 48 Volt angelegt wird, die sehr niedrige Spannung genannt wird, umfasst.

10. Vorrichtung nach Anspruch 9, wobei der erste Teil (22) und der zweite Teil (23) auf derselben gedruckten Schaltung gebildet sind.

11. Anlage zum Lüften und Heizen für ein Fahrzeug, das insbesondere von einem Elektromotor angetrieben wird, die eine Heizvorrichtung (1) nach einem der vorhergehenden Ansprüche umfasst.

## Claims

1. Electric heating device (1) comprising a heating body (2) in which is installed at least one electric heating element (8), the operation of which is placed under the dependency of a control module (3) that is a constituent of the heating device, the heating body (2) comprising walls (5) delimiting, at least partially, a cavity (6) in which the control module (3) is housed, **characterized in that** the electric heating element (8) and the control module (3) are suitable for being powered at low voltage, and **in that** an electrical insulator (17) is provided which covers the walls (5) delimiting the cavity (6), the electrical insulator (17) taking the form of a flexible sheet with a form complementing the form of the walls (5, 12, 18) delimiting the cavity (6).

2. Device according to Claim 1, in which the walls (5) which delimit the cavity are at least one bottom wall (18) and peripheral walls (12) perpendicular to said bottom wall (18).

3. Device according to either of Claims 1 and 2, in which the heating body (2) comprises a tube bundle (4) passed through by a flow to be heated, said tube bundle (4) with said walls (5, 12, 18) delimiting the cavity (6) being joined together to form a single-piece unit.

4. Device according to Claim 3, in which the flexible sheet has at least one through hole (21) through which passes at least one electrical conductor (20) powering the electric heating element (8).

5. Device according to any one of the preceding claims, in which the cavity (6) is closed by a cover (16).

6. Device according to Claim 5, in which the cover (16) is made of a metal material and comprises the electrical insulator (27) arranged on its face turned toward the cavity (6).

7. Device according to Claim 3, in which the single-piece unit is made of a metal material.

8. Device according to any one of the preceding claims, in which the electrical insulator (17) takes the form of a layer of insulating material sprayed onto an internal face of the walls (5, 12, 18) delimiting the cavity.

9. Device according to any one of the preceding claims, in which the control module (3) comprises a first part (22) passed through by the low voltage and a second part (23) passed through by a voltage of between 5 and 48 volts, called very low voltage.

10. Device according to Claim 9, in which the first part (22) and the second part (23) are formed on one and the same printed circuit.

11. Ventilation and heating installation for a vehicle, notably driven by an electric motor, comprising a heating device (1) according to any one of the preceding claims.
